(19) Europäisches Patentamt
European Patent Office
Office européen des brevets

(11) EP 1 798 792 B1

(12) **EUROPEAN PATENT SPECIFICATION**

(45) Date of publication and mention of the grant of the patent:
**05.01.2011 Bulletin 2011/01**

(21) Application number: **05790529.1**

(22) Date of filing: **04.10.2005**

(51) Int Cl.:
***H01M 10/42*** *(2006.01)* ***H01M 10/052*** *(2010.01)*
***H01M 10/0567*** *(2010.01)* *H01M 10/0569* *(2010.01)*

(86) International application number:
**PCT/JP2005/018347**

(87) International publication number:
**WO 2006/038614 (13.04.2006 Gazette 2006/15)**

(54) **NONAQUEOUS ELECTROLYTE SOLUTION, AND NONAQUEOUS ELECTROLYTE BATTERY HAVING SAME**

WASSERFREIE ELEKTROLYTLÖSUNG UND BATTERIE MIT SELBIGEN WASSERFREIEM ELEKTROLYT

SOLUTION ÉLECTROLYTIQUE NON AQUEUSE ET BATTERIE ÉLECTROLYTIQUE NON AQUEUSE COMPRENANT LADITE SOLUTION

(84) Designated Contracting States:
**DE FR**

(30) Priority: **05.10.2004 JP 2004292479**
**05.04.2005 JP 2005108711**

(43) Date of publication of application:
**20.06.2007 Bulletin 2007/25**

(73) Proprietor: **Bridgestone Corporation**
**Tokyo 104-8340 (JP)**

(72) Inventors:
- **HORIKAWA, Yasuo**
**c/o Bridgestone Corporation**
**Kodaira-shi, Tokyo, 1878531 (JP)**
- **OTSUKI, Masashi**
**c/o Bridgestone Corporation**
**Kodaira-shi, Tokyo, 1878531 (JP)**
- **EGUCHI, Shinichi**
**c/o Bridgestone Corporation**
**Kodaira-shi, Tokyo, 1878531 (JP)**
- **KANNO, Hiroshi**
**c/o Bridgestone Corporation**
**Kodaira-shi,Tokyo , 1878531 (JP)**

(74) Representative: **Whalley, Kevin**
**Marks & Clerk LLP**
**90 Long Acre**
**London WC2E 9RA (GB)**

(56) References cited:
**EP-A- 1 204 157** **WO-A-03/090295**
**WO-A-2004/001882** **JP-A- 11 191 431**
**JP-A- 2001 015 158** **JP-A- 2001 015 172**
**JP-A- 2001 516 492** **JP-A- 2003 077 532**
**JP-A- 2003 173 819** **US-A1- 2004 091 772**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 798 792 B1

**Description**

This invention relates to a non-aqueous electrolyte and a non-aqueous electrolyte battery comprising the same, and more particularly to a non-aqueous electrolyte having a high non-combustibility and a non-aqueous electrolyte battery having excellent battery performances.

The non-aqueous electrolyte is used as an electrolyte for a lithium battery, a lithium ion secondary battery, an electric double layer capacitor or the like, and also these devices have a high voltage and a high energy density, so that they are widely used as a driving power source for personal computers, mobile phones and the like. Moreover, as the non-aqueous electrolyte are commonly used ones obtained by dissolving a support salt such as $LiPF_6$ or the like in an aprotic organic solvent such as an ester compound, an ether compound or the like. However, since the aprotic organic solvent is combustible, when it leaks from the device, there is a possibility of firing-burning and also there is a problem in view of safety.

As to this problem, a method for rendering the non-aqueous electrolyte flame retardant is studied. For example, there are proposed a method wherein a phosphate such as trimethyl phosphate or the like is used in the non-aqueous electrolyte, and a method wherein the phosphate is added to an aprotic organic solvent (see JP-A-H4-184870, JP-A-H8-22839 and JP-A-2000-182669). However, the phosphate is gradually reduction-decomposed on a negative electrode by repeating discharge-recharges to highly deteriorate battery performances such as discharge-recharge efficiency, cyclic performance and the like, so that there is a limit in the addition amount thereof.

As to this problem, there is tried a method wherein a compound for suppressing the decomposition of the phosphate is further added to the non-aqueous electrolyte or the molecular structure of the phosphate itself is devised (see JP-A-H11-67267, JP-A-H10-189040 and JP-A-2003-109659). Even in this case, however, there is a limit in the addition amount and also the flame retardance of the phosphate itself is deteriorated, so that the electrolyte only provides self-extinguishing property and the safety of the electrolyte cannot be sufficiently ensured.

Moreover, JP-A-H06-13108 discloses a method wherein a phosphazene compound is added to the non-aqueous electrolyte for giving flame retardance to the non-aqueous electrolyte. Some of the phosphazene compounds exhibit a high non-combustibility and have a tendency to improve the flame retardance of the non-aqueous electrolyte as the amount thereof added to the non-aqueous electrolyte is increased. However, since the phosphazene compound exhibiting the high non-combustibility is generally low in the solubility of a support salt and the dielectric constant, as the addition amount is increased, precipitation of the support salt and lowering of electric conductivity are caused, and hence the discharge capacity of the battery may be lowered or the discharge-recharge performance may be deteriorated. Therefore, when a phosphazene compound exhibiting high non-combustibility is added, there is a problem that the addition amount is limited.

On the other hand, the increased size of the battery and further increased energy density thereof have recently progressed for use as a main power source or an auxiliary power source for electric automobiles and fuel cell vehicles, and the battery is required to have a higher safety than the conventional one. In the conventional non-aqueous secondary battery, if a large current flows violently and the battery generates abnormal heat in an emergency such as an overcharge, an external short-circuiting or the like, a metal oxide used in the positive electrode is decomposed to generate a great amount of oxygen gas. Thus, the interior of the battery reaches a state of an oxygen concentration much higher than that in the atmosphere and is exposed to a condition that igniting-firing may be caused very easily.

When the battery is exploded or fired by the gas and heat generated in such a condition or ignited by sparks generated in short-circuiting, the resulting damage seems to become very large. Therefore, the non-aqueous electrolyte is desirable to be non-combustible not only in a normal atmosphere but also under a condition having a higher oxygen concentration. It is also considered that a risk of igniting-firing the battery is highly reduced and the safety of the battery is considerably improved by using a non-aqueous electrolyte having such a higher non-combustibility. In the conventional method of adding the above-mentioned phosphate or phosphazene compound, however, there is a limit in the improvement of the flame retardance Attention is also drawn to the disclosures of WO 2004/001882 A; WO 03/090295A; EP-1201457A; and US 2004/091772A.

It is, therefore, an object of the invention to solve the above-mentioned problems of the conventional techniques and to provide a non-aqueous electrolyte exhibiting a non-combustibility even under a condition having a higher oxygen concentration and a non-aqueous electrolyte battery comprising such a non-aqueous electrolyte and having excellent battery performances.

The inventors have made various studies in order to achieve the above object and discovered that the non-combustibility of the non-aqueous electrolyte can be highly improved by using a non-aqueous solvent containing a specified phosphazene compound and a specified phosphate compound in the non-aqueous electrolyte, while maintaining battery performances such as a discharge capacity, cyclic performance and the like of the non-aqueous electrolyte battery using such an electrolyte, and as a result the invention has been accomplished.

That is, a non-aqueous electrolyte according to the invention is characterized by comprising a non-aqueous solvent containing a cyclic phosphazene compound represented by the following general formula (I):

$(NPR^1_2)_n$ (I)

[wherein $R^1$s are independently a halogen element or a monovalent substituent; and n is 3-4] and a fluorophosphate compound represented by the following general formula (II):

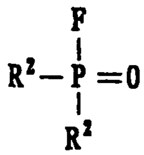

···(II)

[wherein $R^2$s are independently a halogen element, an alkoxy group or an aryloxy group, and at least one of the two $R^2$s is an alkoxy group or an aryloxy group] and a support salt. When n is 3, at least four of the $R^1$s are the halogen element; and when n is 4, at least seven of the $R^1$s are the halogen element.

In the non-aqueous electrolyte according to the invention, the fluorophosphate compound is preferably a compound of the general formula (II) wherein one of the two $R^2$s is fluorine and the other is an alkoxy group or an aryloxy group.

In the non-aqueous electrolyte according to the invention, the cyclic phosphazene compound is preferably a compound of the general formula (I) wherein $R^1$s are independently fluorine, an alkoxy group or an aryloxy group and a compound of the general formula (I) wherein at least three of the $R^1$s are fluorine.

In a preferable embodiment of the non-aqueous electrolyte according to the invention, a volume ratio of the cyclic phosphazene compound represented by the general formula (I) to the fluorophosphate compound represented by the general formula (II) is within a range of 30/70-70/30.

In another preferable embodiment of the non-aqueous electrolyte according to the invention, the non-aqueous solvent further contains an aprotic organic solvent.

In the non-aqueous electrolyte according to the invention, a total content of the cyclic phosphazene compound represented by the general formula (I) and the fluorophosphate compound represented by the general formula (II) in the non-aqueous solvent is preferably not less than 15% by volume, and more preferably not less than 70% by volume.

The non-aqueous electrolyte according to the invention may preferably further contain an unsaturated cyclic ester compound represented by the following general formula (III):

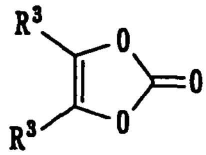

···(III)

[wherein $R^3$s are independently hydrogen, fluorine or an alkyl group having a carbon number of 1-2, with the proviso that two $R^3$s may be bonded with each other to form a ring] and/or an aromatic compound represented by the following general formula (IV):

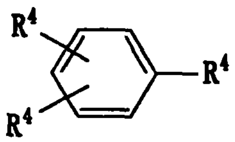

···(IV)

[wherein $R^4$s are independently hydrogen, fluorine, an alkoxy group having a carbon number of 1-2, an alkyl group or an cycloalkyl group having a carbon number of 1-6, or an aryl group].

Also, a non-aqueous electrolyte battery according to the invention is characterized by comprising the above-described non-aqueous electrolyte, a positive electrode and a negative electrode.

According to the invention, there can be provided a non-aqueous electrolyte using a non-aqueous solvent containing the specified phosphazene compound and the specified phosphate compound, having a very high non-combustibility and capable of sufficiently maintaining battery performances when being applied to a non-aqueous electrolyte battery. Also, there can be provided a non-aqueous electrolyte battery comprising such an non-aqueous electrolyte and having a high non-combustibility and excellent battery performances.

The non-aqueous electrolyte according to the invention will be described in detail below. The non-aqueous electrolyte according to the invention is characterized by comprising a non-aqueous solvent containing a cyclic phosphazene compound represented by the general formula (I) and a fluorophosphate compound represented by the general formula (II), and a support salt. Furthermore, the non-aqueous solvent may contain an aprotic organic solvent. Heretofore, when each of the phosphazene compound and the phosphate compound is used alone, there is a limit in balancing non-combustibility and battery performances of the non-aqueous electrolyte, but the non-combustibility and battery performances of the non-aqueous electrolyte can be highly balanced by using a combination of the phosphazene compound of the formula (I) and the fluorophosphate compound of the formula (II). Although the reason is not necessarily clear, it is considered that a stable coating is formed on a surface of an electrode by the synergistic effect of the phosphazene compound of the formula (I) and the fluorophosphate compound of the formula (II), and as a result, the discharge-recharge property of the battery is stabilized and a highly non-combustible gas component generated by the reaction and thermal decomposition of the phosphazene compound and the fluorophosphate compound develops a non-combustibility even at a higher oxygen concentration.

The cyclic phosphazene compound used in the non-aqueous electrolyte according to the invention is represented by the general formula (I). In the formula (I), $R^1$ is not particularly limited as far as it is a halogen element or a monovalent substituent, and $R^1$s may be same or different. The halogen elements are preferably fluorine, chlorine, bromine and the like. Among them, fluorine is most preferable and chlorine is next preferable from a viewpoint of low viscosity.

Moreover, as the monovalent substituent in $R^1$ of the formula (I) are mentioned an alkoxy group, an aryloxy group, an alkyl group, an aryl group, an acyl group, a substituted or non-substituted amino group, an alkylthio group, an arylthio group and the like. Among them, the alkoxy group and the aryloxy group are preferable from a viewpoint that the non-combustibility is excellent. As the alkoxy group are mentioned methoxy group, ethoxy group, propoxy group, butoxy group and the like, allyloxy group and the like containing a double bond, alkoxy-substituted alkoxy groups such as methoxy ethoxy group, methoxy ethoxy ethoxy group and the like.
As the aryloxy group are mentioned phenoxy group, methylphenoxy group, methoxy phenoxy group and the like. As the alkyl group are mentioned methyl group, ethyl group, propyl group, butyl group, pentyl group and the like. As the aryl group are mentioned phenyl group, tolyl group, naphthyl group and the like. As the substituted or non-substituted amino group are mentioned amino group, methylamino group, dimethylamino group, ethylamino group, diethylamino group, aziridyl group, pyrolidyl group and the like. As the alkylthio group are mentioned methylthio group, ethylthio group and the like. As the arylthio group are mentioned phenylthio group and the like. In these monovalent substituents, a hydrogen element may be substituted with a halogen element and is preferably substituted with fluorine.

$R^1$ in the formula (I) is preferably a halogen element from a viewpoint that flame retardance is improved and more preferably fluorine from a viewpoint of low viscosity. Also, it is preferable that three or more of $R^1$s are fluorine in view of balancing the flame retardance and the low viscosity.

Further, n in the formula (I) is 3-4, and n is preferably 3 in view of cost and easy preparation. The phosphazene compounds may be used alone or in a combination of two or more.

The fluorophosphate compound used in the non-aqueous electrolyte according to the invention is represented by the general formula (II). $R^2$s in the formula (II) are a halogen element, an alkoxy group or an aryloxy group, and at least one of the two $R^2$s is an alkoxy group or an aryloxy group. The halogen elements are preferably fluorine, chlorine, bromine and the like. Among them, fluorine is most preferable from a viewpoint of a low viscosity.

As the alkoxy group in $R^2$ of the formula (II) are mentioned methoxy group, ethoxy group, propoxy group, butoxy group and the like, allyloxy group and the like containing a double bond, alkoxy-substituted alkoxy groups such as methoxy ethoxy group, methoxy ethoxy ethoxy group and the like. In these alkoxy groups, a hydrogen element may be substituted with a halogen element and is preferably substituted with fluorine. Among them, methoxy group, ethoxy group, trifluoroethoxy group and propoxy group are more preferable from a viewpoint of an excellent flame retardance and a low viscosity.

As the aryloxy group in $R^2$ of the formula (II) are mentioned phenoxy group, methylphenoxy group, methoxy phenoxy group and the like. In these aryloxy groups, a hydrogen element may be substituted with a halogen element and is preferably substituted with fluorine. Among them, phenoxy group and fluorophenoxy group are more preferable from a viewpoint of an excellent flame retardance and a low viscosity.

The two $R^2$s in the formula (II) may be same or different, and also may be bonded with each other to form a ring. Moreover, a difluorophosphate wherein one of the two $R^2$s is fluorine and the other is the alkoxy group or the aryloxy group is most preferable in view of balancing the flame retardance and the low viscosity.

As the fluorophosphate of the formula (II) are mentioned dimethyl fluorophosphate, diethyl fluorophosphate, bis(trifluoroethyl) fluorophosphate, ethylene fluorophosphate, dipropyl fluorophosphate, diallyl fluorophosphate, dibutyl

fluorophosphate, diphenyl fluorophosphate, difluorophenyl fluorophosphate, methyl chlorofluorophosphate, ethyl chlorofluorophosphate, trifluoroethyl chlorofluorophosphate, propyl chlorofluorophosphate, allyl chlorofluorophosphate, butyl chlorofluorophosphate, cyclohexyl chlorofluorophosphate, methoxyethyl chlorofluorophosphate, methoxyethoxyethyl chlorofluorophosphate, phenyl chlorofluorophosphate, fluorophenyl chlorofluorophosphate, methyl difluorophosphate, ethyl difluorophosphate, trifluoroethyl difluorophosphate, propyl difluorophosphate, tetrafluoropropyl difluorophosphate, allyl difluorophosphate, butyl difluorophosphate, cyclohexyl difluorophosphate, methoxyethyl difluorophosphate, methoxyethoxyethyl difluorophosphate, phenyl difluorophosphate, fluorophenyl difluorophosphate and the like. Among them, bis(trifluoroethyl) fluorophosphate, ethylene fluorophosphate, methyl difluorophosphate, ethyl difluorophosphate, trifluoroethyl difluorophosphate, propyl difluorophosphate, tetrafluoropropyl difluorophosphate and phenyl difluorophosphate are preferable. These fluorophosphates may be used alone or in a combination of two or more.

In the non-aqueous electrolyte according to the invention, a volume ratio of the cyclic phosphazene compound to the fluorophosphate compound is preferably within a range of 5/95-95/5, more preferably within a range of 30/70-70/30 from a viewpoint of balancing the battery performances and the non-combustibility.

The non-aqueous electrolyte according to the invention preferably contains an unsaturated cyclic ester compound represented by the general formula (III). In the formula (III), $R^3$s are hydrogen, fluorine or an alkyl group having a carbon number of 1-2, and a hydrogen element in the alkyl group may be substituted with fluorine. Moreover, the two $R^3$s in the formula (III) may be same or different, or may be bonded with each other to form a ring, which may also have an unsaturated bond. As a bivalent group formed by bonding two $R^3$s are mentioned alkylene groups such as trimethylene group, tetramethylene group, methyltrimethylene group and the like, alkenylene groups such as propenylene group, butenylene group, methylpropenylene group and the like, alkadienylene groups such as butadienylene group and the like.

As the unsaturated cyclic ester compound of the formula (III) are mentioned vinylene carbonate, 4-fluorovinylene carbonate, 4,5-difluorovinylene carbonate, 4-methylvinylene carbonate, 4,5-dimethylvinylene carbonate, 4-fluoromethylvinylene carbonate, 4-difluoromethylvinylene carbonate, 4-trifluoromethylvinylene carbonate, 4-ethylvinylene carbonate, 4,5-diethylvinylene carbonate, 4-fluoroethylvinylene carbonate, 4-difluoroethylvinylene carbonate, 4-trifluoroethylvinylene carbonate, 4,5-bistrifluoromethylvinylene carbonate, catechol carbonate, tetrahydrocatechol carbonate and the like. Among them, vinylene carbonate, 4-fluorovinylene carbonate and catechol carbonate are preferable. These unsaturated cyclic ester compounds may be used alone or in a combination of two or more.

The content of the unsaturated cyclic ester compound of the formula (III) is preferably within a range of 0.5-10% by mass, more preferably within a range of 1-6% by mass based on the whole non-aqueous electrolyte from a viewpoint of balancing the battery performances.

The non-aqueous electrolyte according to the invention is also preferably contains an aromatic compound represented by the general formula (IV). In the formula (IV), $R^4$ is hydrogen, fluorine, an alkoxy group having a carbon number of 1-2, an alkyl group or an cycloalkyl group having a carbon number of 1-6, or an aryl group. Moreover, the three $R^4$s in the formula (IV) may be same or different.

As the aromatic compound of the formula (IV) are mentioned fluorobenzene, difluorobenzene, anisole, fluoroanisole, difluoroanisole, fluoroveratrole, fluoroethoxybenzene, biphenyl, fluorobiphenyl, methoxybiphenyl, terphenyl, cyclohexylbenzen and the like. Among them, fluorobenzene, biphenyl, fluorobiphenyl, fluoroanisole, difluoroanisole and fluoroveratrole are preferable. These aromatic compounds may be used alone or in a combination of two or more.

The content of the aromatic compound of the formula (IV) is preferably within a range of 0.05-4% by mass, more preferably within a range of 0.1-2% by mass based on the whole non-aqueous electrolyte from a viewpoint of balancing the battery performances.

The compound of the formula (III) and the compound of the formula (IV) develop the effect even when these compounds are added alone to the non-aqueous electrolyte of the invention. However, when the compound of the formula (I) is used at a high content of not less than 30% by volume in the non-aqueous electrolyte, it is more preferable that the compound of the formula (III) and the compound of the formula (IV) are used together.

To the non-aqueous electrolyte may be added an aprotic organic solvent within a scope of not damaging the object of the invention. The non-aqueous electrolyte can be rendered into the non-combustible when the amount of the aprotic organic solvent added is not more than 85% by volume in the non-aqueous electrolyte, but the amount is preferably not more than 30% by volume in order to give a higher non-combustibility to the non-aqueous electrolyte. As the aprotic organic solvent are mentioned carbonates such as dimethyl carbonate (DMC), diethyl carbonate (DEC), diphenyl carbonate, ethyl methyl carbonate (EMC), ethylene carbonate (EC), propylene carbonate (PC), vinylene carbonate (VC) and so on; ethers such as 1,2-dimethoxy ethane (DME), tetrahydrofuran (THF), diethyl ether (DEE), phenyl methyl ether and so on; carboxylate esters such as γ-butyrolactone (GBL), γ-valerolactone, methyl formate (MF) and so on; nitriles such as acetonitrile and so on; amides such as dimethylformamide and so on; and sulfones such as dimethyl sulfoxide and so on. These aprotic organic solvents may include an unsaturated bond and a halogen element. Moreover, these aprotic organic solvents may be used alone or in a combination of two or more.

The support salt used in the non-aqueous electrolyte of the invention is preferably a support salt serving as an ion source for a lithium ion. The support salt is not particularly limited, but preferably includes lithium salts such as $LiClO_4$,

$LiBF_4$, $LiPF_6$, $LiCF_3SO_3$, $LiAsF_6$, $LiC_4F_9SO_3$, $Li(CF_3SO_2)_2N$, $Li(C_2F_5SO_2)_2N$ and so on. Among them, $LiPF_6$ is more preferable in that the non-combustibility is excellent. These support salts may be used alone or in a combination of two or more.

The concentration of the support salt in the non-aqueous electrolyte is preferably 0.2-1.5 mol/L (M), more preferably 0.5-1 mol/L (M). When the concentration of the support salt is less than 0.2 mol/L, the electric conductivity of the electrolyte cannot be sufficiently ensured and troubles may be caused in the discharge property and the charge property of the battery, while when it exceeds 1.5 mol/L, the viscosity of the electrolyte rises and the sufficient mobility of the lithium ion cannot be ensured, and hence the sufficient electric conductivity of the electrolyte cannot be ensured and troubles may be caused in the discharge property and the charge property of the battery likewise the above-mentioned case.

The non-aqueous electrolyte battery according to the invention will be described in detail. The non-aqueous electrolyte battery of the invention comprises the above-mentioned non-aqueous electrolyte, a positive electrode and a negative electrode, and may be provided with other members usually used in the technical field of the non-aqueous electrolyte battery such as a separator and the like, if necessary. In this case, the non-aqueous electrolyte battery of the invention may be constructed as a primary battery or a secondary battery.

As an active material for the positive electrode of the non-aqueous electrolyte battery according to the invention are preferably mentioned metal oxides such as $V_2O_5$, $V_6O_{13}$, $MnO_2$, $MnO_3$ and the like; lithium-containing composite oxides such as $LiCoO_2$, $LiNiO_2$, $LiMn_2O_4$, $LiFeO_2$, $LiFePO_4$ and the like; metal sulfides such as $TiS_2$, $MoS_2$ and the like; and electrically conductive polymers such as polyaniline and the like. The lithium-containing composite oxide may be a composite oxide including two or three transition metals selected from the group consisting of Fe, Mn, Co and Ni. In this case, the composite oxide is represented by $LiFe_xCo_yNi_{(1-x-y)}O_2$ [wherein $0 \leq x < 1$, $0 \leq y < 1$, $0 < x+y \leq 1$], $LiMn_xFe_yO_{2-x-y}$ or the like. Among them, $LiCoO_2$, $LiNiO_2$ and $LiMn_2O_4$ are particularly preferable because they are high in capacity, high in safety and excellent in wettability to the electrolyte. These active materials for the positive electrode may be used alone or in a combination of two or more.

As an active material for the negative electrode of the non-aqueous electrolyte battery according to the invention are preferably mentioned lithium metal itself, an alloy of lithium with Al, In, Sn, Si, Pb, Zn or the like, a carbonaceous material such as graphite doped with lithium, and the like. Among them, the carbonaceous material such as graphite or the like is preferable and graphite is particularly preferable in that the safety is higher and the wettablility to the electrolyte is excellent. As the graphite are mentioned natural graphite, artificial graphite, mesophase carbon micro bead (MCMB) and so on, and further mentioned are graphitizable carbon and non-graphitizable carbon. These active materials for the negative electrode may be used alone or in a combination of two or more.

In the case of the conventional non-aqueous electrolyte secondary battery, particularly the conventional non-aqueous electrolyte secondary battery selecting lithium or an alloy thereof as the active material for the negative electrode, there is a problem wherein uneven electrocrystallization and dissolution of a lithium metal are caused by repetition of discharge-recharge to grow lithium in a dendritic form, and also the resulting dendrite not only brings about lowering of the battery performances but also may pass through a separator disposed between the positive and negative electrodes to cause short-circuiting of the battery. However, the above-mentioned non-aqueous electrolyte according to the invention has an effect of suppressing the occurrence of the dendrite due to the repetition of the discharge-recharge in addition to the above-mentioned effects. Therefore, the above-mentioned non-aqueous electrolyte according to the invention is preferable as a non-aqueous electrolyte for a secondary battery, and particularly preferable as a non-aqueous electrolyte for a secondary battery using lithium or an alloy thereof in the negative electrode.

The positive electrode and the negative electrode may be mixed with an electrically conducting agent and a binding agent, if necessary. As the electrically conducting agent are mentioned acetylene black and the like, and as the binding agent are mentioned polyvinylidene fluoride (PVDF), polytetrafluoroethylene (PTFE), styrene-butadiene rubber (SBR), carboxymethyl cellulose (CMC) and the like. These additives may be compounded in the same compounding ratio as in the conventional case.

The forms of the positive and negative electrodes are not particularly limited, but can be properly selected from the well-known forms as the electrode. For example, there are mentioned a sheet form, a column form, a plate form, a spiral form and the like.

As the other member used in the non-aqueous electrolyte battery of the invention is mentioned a separator interposed between the positive and negative electrodes in the non-aqueous electrolyte battery so as to prevent short-circuiting of current due to contact between the electrodes. As a material of the separator are preferably mentioned materials capable of surely preventing contact between the electrodes and passing or impregnating the electrolyte such as non-woven fabrics, thin-layer films and the like made of a synthetic resin such as polytetrafluoroethylene, polypropylene, polyethylene, cellulose based resin, polybutylene terephthalate, polyethylene terephthalate or the like. They may be a single substance, a mixture or a copolymer. Among them, a microporous film having a thickness of about 20-50 $\mu$m and made of polypropylene or polyethylene, and a film made of cellulose based resin, polybutylene terephthalate, polyethylene terephthalate or the like are particularly preferable. In the invention, various well-known members

usually used in the battery field can be preferably used in addition to the above separator.

The form of the above non-aqueous electrolyte battery according to the invention is not particularly limited, but there are preferably mentioned various well-known forms such as coin type, button type, paper type, cylindrical type of polygonal form or spiral structure and so on. In case of the button type, the non-aqueous electrolyte battery can be made by preparing sheet-shaped positive and negative electrodes and sandwiching the separator between the positive and negative electrodes. Also, in case of the spiral structure, the non-aqueous electrolyte battery can be made by preparing a sheet-shaped positive electrode, sandwiching between collectors, piling a sheet-shaped negative electrode thereon and then winding them or the like.

The following examples are given in illustration of the invention and are not intended as limitations thereof.

Example 1

A non-aqueous electrolyte is prepared by dissolving $LiPF_6$ at a concentration of 1 mol/L in a mixed solvent of 70% by volume of a cyclic phosphazene compound of the formula (I) wherein n is 3, two of all $R^1$s are methoxy group (MeO) and four thereof are fluorine (F) and 30% by volume of ethyl difluorophosphate. The non-combustibility and limit oxygen index of the thus obtained non-aqueous electrolyte are evaluated and measured by the following methods to obtain results shown in Table 1.

(1) Non-combustibility of electrolyte

A burning length and a burning time of a flame ignited under an atmospheric environment are measured and evaluated according to a UL94HB method of UL (Underwriting Laboratory) standard. Concretely, a test piece is prepared by impregnating a $SiO_2$ sheet of 127 mm x 12.7 mm with 1.0 mL of the electrolyte based on UL test standard and evaluated. Evaluation standards of non-combustibility, flame retardance, self-extinguishing property and combustion property are shown below. <Evaluation of non-combustibility> In a case that a test flame does not ignite a test piece (combustion length: 0 mm), it is evaluated that there is non-combustibility.

<Evaluation of flame retardance> In a case that the ignited flame does not arrive at a line of 25 mm and the ignition is not observed in the falling object, it is evaluated that there is flame retardance.

<Evaluation of self-extinguishing property> In a case that the ignited flame extinguishes at a line of 25-100 mm and the ignition is not observed in a falling object, it is evaluated that there is self-extinguishing property.

<Evaluation of combustion property> In a case that the ignited flame exceeds a line of 100 mm, it is evaluated that there is combustion property.

(2) Limit oxygen index of electrolyte

The limit oxygen index of the electrolyte is measured according to JIS K 7201. The larger the limit oxygen index, the more difficult the combustion of the electrolyte. Concretely, a test piece is prepared by reinforcing a $SiO_2$ sheet (quartz filter paper, incombustible) of 127 mm x 12.7 mm with U-shaped aluminium foil into a self-supported state and impregnating the $SiO_2$ sheet with 1.0 mL of the electrolyte. The test piece is vertically attached to a test piece supporting member so as to position at a distance separated from an upper end portion of a combustion cylinder (inner diameter: 75 mm, height: 450 mm, equally filled with glass particles of 4 mm in diameter from a bottom to a thickness of 100$\pm$5 mm, and a metal net placed thereon) to not less than 100 mm. Then, oxygen (equal to or more than JIS K 1101) and nitrogen (equal to or more than grade 2 of JIS K 1107) are passed through the combustion cylinder and the test piece is ignited under a predetermined condition (heat source is Type 1, No. 1 of JIS K 2240) to examine combustion state. In this case, a total flow amount in the combustion cylinder is 11.4 L/min. This test is repeated three times, and an average value thereof is shown in Table 1. The oxygen index means a value of a minimum oxygen concentration required for maintaining combustion of a material and represented by a volume percentage. The limit oxygen index in the invention is calculated from minimum oxygen flow amount required for continuing the combustion of the test piece over 3 minutes or more or continuing the combustion after firing so as to maintain a combustion length of not less than 50 mm and minimum nitrogen flow amount at this time according to the following equation:

$$\text{Limit oxygen index} = (\text{Oxygen flow amount}) / [(\text{Oxygen flow amount}) + (\text{Nitrogen flow amount})] \times 100 \ (\text{volume\%})$$

Then, 94 parts by mass of $LiCoO_2$ (an active material for a positive electrode) is added with 3 parts by mass

of acetylene black (electrically conducting agent) and 3 parts by mass of polyvinylidene fluoride (binding agent) and kneaded with an organic solvent (mixed solvent of 50/50 vol% of ethyl acetate and ethanol), and thereafter the kneaded mass is applied onto an aluminium foil having a thickness of 25 μm (collector) with a doctor blade and dried in hot air (100-120°C) to prepare a positive electrode sheet having a thickness of 80 μm. Also, 90 parts by mass of artificial graphite (an active material for a negative electrode) is added with 10 parts by mass of polyvinylidene fluoride (binding agent) and kneaded with an organic solvent (mixed solvent of 50/50 vol% of ethyl acetate and ethanol), and thereafter the kneaded mass is applied onto a copper foil having a thickness of 25 μm (collector) with a doctor blade and dried in hot air (100-120°C) to prepare a negative electrode sheet having a thickness of 80 μm.

The negative electrode sheet is piled on the positive electrode sheet through a separator having a thickness of 25 μm (micro-porous film: made of polypropylene) and wound to prepare a cylinder type electrode. A length of the positive electrode in the cylinder type electrode is about 260 mm. The above-described electrolyte is poured into the cylinder type electrode and sealed to prepare a size AA lithium battery (non-aqueous electrolyte secondary battery). The initial discharge capacity and the cyclic performance of the thus obtained battery are measured by the following methods to obtain results shown in Table 1.

(3) Evaluations of initial discharge capacity and cyclic performance of the battery

The battery is charged and discharged in an atmosphere of 20°C under conditions of upper limit voltage: 4.3 V, lower limit voltage: 3.0 V, discharge current: 50 mA and recharge current: 50 mA, and the discharge capacity measured at this time is divided by a known weight of the electrode to determine the initial discharge capacity (mAh/g). Furthermore, the discharge-recharge are repeated up to 50 cycles under the same discharge-recharge conditions to determine the discharge capacity after 50 cycles, and the capacity remaining ratio S is calculated according to the following equation:

$$\text{Capacity remaining ratio S} = \text{discharge capacity after 50 cycles} / \text{initial discharge capacity} \times 100\ (\%)$$

and is used as an indication for the cyclic performance of the battery.

Example 2

A non-aqueous electrolyte is prepared in the same manner as in Example 1 except that a mixed solvent of 50% by volume of a cyclic phosphazene compound of the formula (I) wherein n is 3, two of all $R^1$s are chlorine (Cl) and four thereof are fluorine (F) and 50% by volume of methyl difluorophosphate is used instead of the mixed solvent used for "the preparation of the non-aqueous electrolyte" in Example 1, and the non-combustibility and limit oxygen index of the resulting non-aqueous electrolyte are evaluated and measured. Also, a non-aqueous electrolyte secondary battery is made in the same manner as in Example 1, and the initial discharge capacity and cyclic performance are measured and evaluated. Results are shown in Table 1.

Example 3

A non-aqueous electrolyte is prepared in the same manner as in Example 1 except that a mixed solvent of 30% by volume of a cyclic phosphazene compound of the formula (I) wherein n is 3, one of all $R^1$s is ethoxy group (EtO) and five thereof are fluorine (F) and 70% by volume of propyl difluorophosphate is used instead of the mixed solvent used for "the preparation of the non-aqueous electrolyte" in Example 1, and the non-combustibility and limit oxygen index of the resulting non-aqueous electrolyte are evaluated and measured. Also, a non-aqueous electrolyte secondary battery is made in the same manner as in Example 1, and the initial discharge capacity and cyclic performance are measured and evaluated. Results are shown in Table 1.

Example 4

A non-aqueous electrolyte is prepared in the same manner as in Example 1 except that a mixed solvent of 40% by volume of a cyclic phosphazene compound of the formula (I) wherein n is 3, one of all $R^1$s is trifluoroethoxy group (TFEO) and five thereof are fluorine (F), 30% by volume of methyl difluorophosphate, 10% by volume of ethylene carbonate and 20% by volume of ethyl methyl carbonate is used instead of the mixed solvent used for "the preparation of the non-aqueous electrolyte" in Example 1, and the non-combustibility and limit oxygen index of the resulting non-aqueous electrolyte are evaluated and measured. Also, a non-aqueous electrolyte secondary battery is made in the same manner as in Example 1, and the initial discharge capacity and cyclic performance are measured and evaluated. Results are shown in Table 1.

Example 5

A non-aqueous electrolyte is prepared in the same manner as in Example 1 except that a mixed solvent of 40% by volume of a cyclic phosphazene compound of the formula (I) wherein n is 4 and all $R^1$s are fluorine (F), 30% by volume of dimethyl fluorophosphate, 10% by volume of ethylene carbonate, 5% by volume of vinylene carbonate and 15% by volume of diethyl carbonate is used instead of the mixed solvent used for "the preparation of the non-aqueous electrolyte" in Example 1, and the non-combustibility and limit oxygen index of the resulting non-aqueous electrolyte are evaluated and measured. Also, a non-aqueous electrolyte secondary battery is made in the same manner as in Example 1, and the initial discharge capacity and cyclic performance are measured and evaluated. Results are shown in Table 1.

Example 6

A non-aqueous electrolyte is prepared in the same manner as in Example 1 except that a mixed solvent of 10% by volume of a cyclic phosphazene compound of the formula (I) wherein n is 4, one of all $R^1$s is methoxy group (MeO) and seven thereof are fluorine (F), 5% by volume of phenyl difluorophosphate, 28% by volume of ethylene carbonate and 57% by volume of dimethyl carbonate is used instead of the mixed solvent used for "the preparation of the non-aqueous electrolyte" in Example 1, and the non-combustibility and limit oxygen index of the resulting non-aqueous electrolyte are evaluated and measured. Also, a non-aqueous electrolyte secondary battery is made in the same manner as in Example 1, and the initial discharge capacity and cyclic performance are measured and evaluated. Results are shown in Table 1.

Example 7

A non-aqueous electrolyte is prepared in the same manner as in Example 1 except that 1.0% by mass of 4-fluoroanisole is further added to the mixed solvent used for "the preparation of the non-aqueous electrolyte" in Example 3, and the non-combustibility and limit oxygen index of the resulting non-aqueous electrolyte are evaluated and measured. Also, a non-aqueous electrolyte secondary battery is made in the same manner as in Example 1, and the initial discharge capacity and cyclic performance are measured and evaluated. Results are shown in Table 1.

Example 8

A non-aqueous electrolyte is prepared in the same manner as in Example 1 except that a mixed solvent of 30% by volume of a cyclic phosphazene compound of the formula (I) wherein n is 3, one of all $R^1$s is methoxy group (MeO) and five thereof are fluorine (F) and 70% by volume of bistrifluoroethyl fluorophosphate is used instead of the mixed solvent used for "the preparation of the non-aqueous electrolyte" in Example 1, and the non-combustibility and limit oxygen index of the resulting non-aqueous electrolyte are evaluated and measured. Also, a non-aqueous electrolyte secondary battery is made in the same manner as in Example 1, and the initial discharge capacity and cyclic performance are measured and evaluated.
Results are shown in Table 1.

Example 9

A non-aqueous electrolyte is prepared in the same manner as in Example 1 except that 2% by mass of 3-fluorovinylene carbonate and 0.5% by mass of 4-fluoroveratrole are further added to the mixed solvent used for "the preparation of the non-aqueous electrolyte" in Example 8, and the non-combustibility and limit oxygen index of the resulting non-aqueous electrolyte are evaluated and measured. Also, a non-aqueous electrolyte secondary battery is made in the same manner as in Example 1, and the initial discharge capacity and cyclic performance are measured and evaluated. Results are shown in Table 1.

Comparative Example 1

A non-aqueous electrolyte is prepared in the same manner as in Example 1 except that a mixed solvent of 33% by volume of ethylene carbonate and 67% by volume of ethyl methyl carbonate is used instead of the mixed solvent used for "the preparation of the non-aqueous electrolyte" in Example 1, and the non-combustibility and limit oxygen

index of the resulting non-aqueous electrolyte are evaluated and measured. Also, a non-aqueous electrolyte secondary battery is made in the same manner as in Example 1, and the initial discharge capacity and cyclic performance are measured and evaluated. Results are shown in Table 1.

Comparative Example 2

A non-aqueous electrolyte is prepared in the same manner as in Example 1 except that a mixed solvent of 30% by volume of trimethyl phosphate, 23% by volume of ethylene carbonate and 47% by volume of ethyl methyl carbonate is used instead of the mixed solvent used for "the preparation of the non-aqueous electrolyte" in Example 1, and the non-combustibility and limit oxygen index of the resulting non-aqueous electrolyte are evaluated and measured. Also, a non-aqueous electrolyte secondary battery is made in the same manner as in Example 1, and the initial discharge capacity and cyclic performance are measured and evaluated. Results are shown in Table 1.

Comparative Example 3

A non-aqueous electrolyte is prepared in the same manner as in Example 1 except that a mixed solvent of 30% by volume of phenyl difluorophosphate, 23% by volume of ethylene carbonate and 47% by volume of ethyl methyl carbonate is used instead of the mixed solvent used for "the preparation of the non-aqueous electrolyte" in Example 1, and the non-combustibility and limit oxygen index of the resulting non-aqueous electrolyte are evaluated and measured. Also, a non-aqueous electrolyte secondary battery is made in the same manner as in Example 1, and the initial discharge capacity and cyclic performance are measured and evaluated. Results are shown in Table 1.

Comparative Example 4

A non-aqueous electrolyte is prepared in the same manner as in Example 1 except that a mixed solvent of 18% by volume of a cyclic phosphazene compound of the formula (I) wherein n is 3, one of all $R^1$s is phenoxy group (PhO) and five thereof are fluorine (F), 27% by volume of ethylene carbonate and 55% by volume of diethyl carbonate is used instead of the mixed solvent used for "the preparation of the non-aqueous electrolyte" in Example 1, and the non-combustibility and limit oxygen index of the resulting non-aqueous electrolyte are evaluated and measured. Also, a non-aqueous electrolyte secondary battery is made in the same manner as in Example 1, and the initial discharge capacity and cyclic performance are measured and evaluated. Results are shown in Table 1.

Comparative Example 5

A non-aqueous electrolyte is prepared in the same manner as in Example 1 except that a mixed solvent of 50% by volume of a cyclic phosphazene compound of the formula (I) wherein n is 3, one of all $R^1$s is phenoxy group (PhO) and five thereof are fluorine (F) and 50% by volume of triethyl phosphate is used instead of the mixed solvent used for "the preparation of the non-aqueous electrolyte" in Example 1, and the non-combustibility and limit oxygen index of the resulting non-aqueous electrolyte are evaluated and measured. Also, a non-aqueous electrolyte secondary battery is made in the same manner as in Example 1, and the initial discharge capacity and cyclic performance are measured and evaluated. Results are shown in Table 1.

Table 1

| | Evaluation of non-combustibility | Limit oxygen index (vol%) | Initial discharge capacity ratio (mAh/g) | Capacity remaining after 50 cycles (%) |
|---|---|---|---|---|
| Example 1 | Non-combustibility | 40.2 | 147 | 97 |
| Example 2 | Non-combustibility | 79.3 | 143 | 96 |
| Example 3 | Non-combustibility | 43.4 | 134 | 94 |
| Example 4 | Non-combustibility | 34.3 | 145 | 96 |
| Example 5 | Non-combustibility | 38.7 | 146 | 95 |
| Example 6 | Non-combustibility | 25.3 | 147 | 97 |
| Example 7 | Non-combustibility | 43.4 | 146 | 97 |

(continued)

| | Evaluation of non-combustibility | Limit oxygen index (vol%) | Initial discharge capacity ratio (mAh/g) | Capacity remaining after 50 cycles (%) |
|---|---|---|---|---|
| Example 8 | Non-combustibility | 39.6 | 131 | 91 |
| Example 9 | Non-combustibility | 39.6 | 144 | 96 |
| Comparative Example 1 | Combustion property | 18.0 | 147 | 97 |
| Comparative Example 2 | Self-extinguishing property | 21.5 | 64 | 33 |
| Comparative Example 3 | Flame retardance | 23.2 | 98 | 42 |
| Comparative Example 4 | Non-combustibility | 26.1 | 139 | 97 |
| Comparative Example 5 | Non-combustibility | 28.3 | 25 | 22 |

As seen from Examples 1-3 of Table 1, the non-aqueous electrolyte of the invention using the mixed solvent composed of the cyclic phosphazene compound represented by the general formula (I) and the fluorophosphate compound represented by the general formula (II) has a non-combustibility even at a higher oxygen concentration of not less than 40% by volume, and also the battery using the same has a high discharge capacity and an excellent cyclic performance. Also, as seen from Examples 4 and 5, the non-aqueous electrolyte of the invention has a high non-combustibility with a limit oxygen index of not less than 30% by volume even when 30% by volume of the aprotic organic solvent is added. Furthermore, as seen from Example 6, the non-aqueous electrolyte of the invention has a non-combustibility even when it contains 15% by volume in total of the cyclic phosphazene compound of the general formula (I) and the fluorophosphate compound of the general formula (II). Moreover, as seen from Examples 5, 7 and 9, the discharge capacity and the cyclic performance are further improved by adding a small amount of the unsaturated cyclic ester compound of the general formula (III) and/or the aromatic compound of the general formula (IV). Thus, the non-aqueous electrolyte of the invention containing the specified phosphazene compound and the specified phosphate compound is very high in the limit oxygen index, and the non-aqueous electrolyte secondary battery of the invention using such an non-aqueous electrolyte has excellent discharge capacity and cyclic performance.

On the other hand, as seen from Comparative Examples 2 and 3 of Table 1, when the phosphate compound is used alone, the initial discharge capacity becomes lower as compared with the Examples and the cyclic performance is highly deteriorated irrespective of its structure. In Comparative Example 4 of Table 1, when only the cyclic phosphazene compound of the general formula (I) is mixed with the aprotic organic solvent (EC/EMC), as the cyclic phosphazene compound is added at an amount of not less than 20% by volume, the cyclic phosphazene compound and the aprotic organic solvent (EC/EMC) are separated into two layers (become non-uniform) and cannot be used as a non-aqueous electrolyte for a battery, so that they can be added only at an amount of about 18% by volume, and hence the resulting electrolyte is non-combustible but its limit oxygen index is limited to about 26% by volume. Moreover, as seen from Comparative Example 5 of Table 1, when a phosphate compound having a structure different from the fluorophosphate compound of the general formula (II) is used together with the cyclic phosphazene compound, non-combustibility can be attained, but the initial discharge capacity and the cyclic performance are highly deteriorated.

Example 10

A non-aqueous electrolyte is prepared by dissolving $LiPF_6$ at a concentration of 1 mol/L in a mixed solvent of 10% by volume of a cyclic phosphazene compound of the formula (I) wherein n is 3, one of all $R^1$s is phenoxy group and five thereof are fluorine, 5% by volume of methyl difluorophosphate, 42% by volume of ethylene carbonate and 43% by volume of ethyl methyl carbonate, and the non-combustibility of the resulting non-aqueous electrolyte is evaluated according to the above method. The results are shown in Table 2.

Then, lithium-manganese composite oxide ($LiMn_2O_4$) is used as an active material for a positive electrode, and this oxide, acetylene black as an electrically conducting agent and fluorocarbon resin as a binding agent are mixed at a mass ratio of 90:5:5 and dispersed into N-methylpyrrolidone to prepare a slurry, and the slurry is applied on an aluminium foil as a collector for a positive electrode, dried and then punched out in the form of a disk having a diameter of 12.5 mm to make a positive electrode. On the other hand, as a negative electrode is used a lithium metal sheet having

a diameter of 12.5 mm and a thickness of 1.0 mm. Then, the positive and negative electrodes are overlapped through a separator of a cellulose non-woven fabric impregnated with the electrolyte, and accommodated in a stainless case serving as a positive terminal, and sealed with a stainless sealing plate serving as a negative terminal through a polypropylene gasket to prepare a coin-type battery (lithium secondary battery) having a diameter of 20 mm and a thickness of 1.6 mm. The initial discharge capacity and cycle life of the resulting battery are measured by the following methods to obtain results shown in Table 2.

(4) Discharge-recharge test for the coin-type battery

The coin-type battery is discharged and recharged in an atmosphere of 20°C at a voltage range of 4.3-3.0 V and a current density of 2.0 mA/cm$^2$, and the discharge capacity measured at this time is divided by a known mass of the positive electrode to determine the initial discharge capacity (mAh/g). Furthermore, the discharge-recharge cycle is repeated under the same conditions to evaluate a cycle life. The cycle life is shown by the number of cycles when the charging voltage does not reach a termination value (4.3 V) or when a capacity becomes less than 1% of the initial discharge capacity. Moreover, when a rapid voltage drop is caused in the charging or the voltage shows unstable behavior and the charging voltage does not reach the termination value (4.3 V), it is assessed to cause the short-circuiting in the battery, and the cycle number measured at this time is used as an indication for the effect of suppressing dendrite. Also, when the capacity becomes less than 1% of the initial discharge capacity, it is assessed to cause reduction-decomposition of the electrolyte before short-circuiting, and the cycle number measured at this time is used as an indication for the resistance to reduction in the electrolyte.

Example 11

A non-aqueous electrolyte is prepared in the same manner as in Example 10 except that a mixed solvent of 20% by volume of a cyclic phosphazene compound of the formula (I) wherein n is 3, two of all $R^1$s are ethoxy group and four thereof are fluorine, 40% by volume of propyl difluorophosphate and 40% by volume of ethylene carbonate is used instead of the mixed solvent used for "the preparation of the non-aqueous electrolyte" in Example 10, and the non-combustibility of the resulting non-aqueous electrolyte is evaluated. Moreover, a lithium secondary battery is made in the same manner as in Example 10 except that a negative electrode is a lithium-tin alloy sheet, and the initial discharge capacity and cycle life are measured in the discharge-recharge test. The results are shown in Table 2.

Example 12

A non-aqueous electrolyte is prepared in the same manner as in Example 10 except that a mixed solvent of 5% by volume of a cyclic phosphazene compound of the formula (I) wherein n is 3, one of all $R^1$s is allyl group and five thereof are fluorine, 93% by volume of ethyl difluorophosphate and 2% by volume of vinylene carbonate is used instead of the mixed solvent used for "the preparation of the non-aqueous electrolyte" in Example 10, and the non-combustibility of the resulting non-aqueous electrolyte is evaluated. Moreover, a lithium secondary battery is made in the same manner as in Example 10, and the initial discharge capacity and cycle life are measured in the discharge-recharge test. The results are shown in Table 2.

Comparative Example 6

A non-aqueous electrolyte is prepared in the same manner as in Example 10 except that a mixed solvent of 50% by volume of ethylene carbonate and 50% by volume of methyl ethyl carbonate is used instead of the mixed solvent used for "the preparation of the non-aqueous electrolyte" in Example 10, and the non-combustibility of the resulting non-aqueous electrolyte is evaluated. Moreover, a lithium secondary battery is made in the same manner as in Example 10, and the initial discharge capacity and cycle life are measured in the discharge-recharge test. The results are shown in Table 2.

Comparative Example 7

A non-aqueous electrolyte is prepared in the same manner as in Example 10 except that a mixed solvent of 15% by volume of trimethyl phosphate, 42% by volume of ethylene carbonate and 43% by volume of ethyl methyl carbonate is used instead of the mixed solvent used for "the preparation of the non-aqueous electrolyte" in Example 10, and the non-combustibility of the resulting non-aqueous electrolyte is evaluated. Moreover, a lithium secondary battery is made in the same manner as in Example 10, and the initial discharge capacity and cycle life are measured in the discharge-recharge test. The results are shown in Table 2.

Comparative Example 8

A non-aqueous electrolyte is prepared in the same manner as in Example 10 except that a mixed solvent of 20% by volume of a cyclic phosphazene compound of the formula (I) wherein n is 3, two of all $R^1$s are ethoxy group and four thereof are fluorine, 40% by volume of triethyl phosphate and 40% by volume of ethylene carbonate is used instead of the mixed solvent used for "the preparation of the non-aqueous electrolyte" in Example 10, and the non-combustibility of the resulting non-aqueous electrolyte is evaluated. Moreover, a lithium secondary battery is made in the same manner as in Example 10 except that a negative electrode is a lithium-tin alloy sheet, and the initial discharge capacity and cycle life are measured in the discharge-recharge test. The results are shown in Table 2.

Table 2

| | Evaluation of non-combustibility | Initial discharge capacity | Cycle number (Reason) (mAh/g) |
|---|---|---|---|
| Example 10 | Non-combustibility | 119 | 97 (Short-circuiting) |
| Example 11 | Non-combustibility | 124 | 223 (Short-circuiting) |
| Example 12 | Non- combustibility | 132 | 102 (Short-circuiting) |
| Comparative Example 6 | Combustion property | 118 | 82 (Short-circuiting) |
| Comparative Example 7 | Self-extinguishing property | 48 | 35 (Decomposition) |
| Comparative Example 8 | Non-combustibility | 28 | 12 (Decomposition) |

As seen from Examples 10-12 of Table 2, the non-aqueous electrolyte containing the cyclic phosphazene compound of the general formula (I) and the fluorophosphate compound of the general formula (II) has a non-combustibility, and the lithium secondary battery using such an electrolyte has an excellent cycle life, so that it is assessed that the cyclic phosphazene compound of the general formula (I) and the fluorophosphate compound of the general formula (II) have an effect of suppressing dendrite. Thus, it is confirmed that the non-aqueous electrolyte of the invention has a high non-combustibility, and by using such an electrolyte in a lithium secondary battery is obtained a lithium secondary battery having an excellent discharge-recharge cycle life, in which dendrite is hardly caused on the negative electrode made of lithium or alloy thereof.

On the other hand, as seen from Comparative Examples 7 and 8 of Table 2, the non-aqueous electrolyte containing a usual phosphate triester has a poor cycle life due to the lowering of the capacity based on the decomposition of the solvent itself even if the cyclic phosphazene compound of the general formula (I) is added.

As seen from the above results, there can be provided a non-aqueous electrolyte battery balancing high non-combustibility and excellent battery performances by using a non-aqueous electrolyte containing the cyclic phosphazene compound represented by the general formula (I) and the fluorophosphate compound represented by the general formula (II).

## Claims

1. A non-aqueous electrolyte **characterized by** comprising a non-aqueous solvent containing a cyclic phosphazene compound represented by the following general formula (I):

$$(NPR^1{}_2)_n \qquad (I)$$

[wherein $R^1$s are independently a halogen element or a monovalent substituent; and n is 3-4, provided that when n is 3, at least four of the $R^1$s are the halogen element, and when n is 4, at least seven of the $R^1$s are the halogen element] and a fluorophosphate compound represented by the following general formula (II):

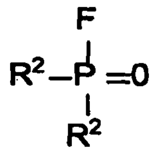

···(II)

[wherein $R^2$s are independently a halogen element, an alkoxy group or an aryloxy group, and at least one of the two $R^2$s is the alkoxy group or the aryloxy group], and a support salt.

2. A non-aqueous electrolyte as claimed in claim 1, wherein one of the two $R^2$s is fluorine and the other is an alkoxy group or an aryloxy group in the general formula (II).

3. A non-aqueous electrolyte as claimed in claim 1 or 2, wherein $R^1$s in the general formula (I) are independently fluorine, an alkoxy group or an aryloxy group.

4. A non-aqueous electrolyte as claimed in claim 1 or 2, wherein at least three of the $R^1$s in the general formula (I) are fluorine.

5. A non-aqueous electrolyte as claimed in any of claims 1 to 4, wherein a volume ratio of the cyclic phosphazene compound represented by the general formula (I) to the fluorophosphate compound represented by the general formula (II) is within a range of 30/70-70/30.

6. A non-aqueous electrolyte as claimed in any of claims 1 to 5, wherein the non-aqueous solvent further contains an aprotic organic solvent.

7. A non-aqueous electrolyte as claimed in any of claims 1 to 6, wherein a total content of the cyclic phosphazene compound represented by the general formula (I) and the fluorophosphate compound represented by the general formula (II) in the non-aqueous solvent is not less than 15% by volume.

8. A non-aqueous electrolyte as claimed in claim 7, wherein the total content of the cyclic phosphazene compound represented by the general formula (I) and the fluorophosphate compound represented by the general formula (II) in the non-aqueous solvent is not less than 70% by volume.

9. A non-aqueous electrolyte as claimed in any of claims 1 to 8, which further contains an unsaturated cyclic ester compound represented by the following general formula (III):

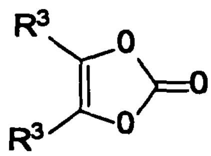

···(III)

[wherein $R^3$s are independently hydrogen, fluorine or an alkyl group having a carbon number of 1-2, with the proviso that two $R^3$s may be bonded with each other to form a ring] and/or an aromatic compound represented by the following general formula (IV):

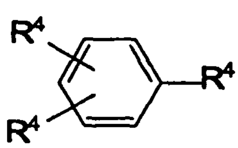

···(IV)

[wherein $R^4$s are independently hydrogen, fluorine, an alkoxy group having a carbon number of 1-2, an alkyl group or an cycloalkyl group having a carbon number of 1-6, or an aryl group].

**10.** A non-aqueous electrolyte battery comprising a non-aqueous electrolyte as claimed in any of claims 1 to 9, a positive electrode and a negative electrode.

## Patentansprüche

**1.** Nichtwässeriger Elektrolyt, **gekennzeichnet durch** Umfassen eines nichtwässerigen Lösemittels, die eine zyklische Phosphazenverbindung enthält, repräsentiert **durch** die folgende allgemeine Formel (I):

$$(NPR^1{}_2)_n \qquad (I)$$

[wobei $R^1$ unabhängig ein Halogenelement oder ein einwertiger Substituent sind; und n gleich 3-4 ist, vorausgesetzt dass, wenn n gleich 3 ist, mindestens vier der $R^1$ das Halogenelement sind, und wenn n gleich 4 ist, mindestens sieben der $R^1$ das Halogenelement sind] und eine Fluorophosphatverbindung, repräsentiert **durch** die folgende allgemeine Formel (II):

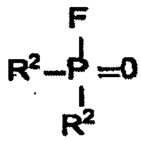

(II)

[wobei $R^2$ unabhängig ein Halogenelement, eine Alkoxygruppe oder eine Aryloxygruppe sind und mindestens eines der zwei $R^2$ die Alkoxygruppe oder die Aryloxygruppe ist] und ein Trägersalz.

**2.** Nichtwässeriger Elektrolyt nach Anspruch 1, wobei eines der zwei $R^2$ Fluor ist und das andere eine Alkoxygruppe oder eine Aryloxygruppe in der allgemeinen Formel (II) ist.

**3.** Nichtwässeriger Elektrolyt nach Anspruch 1 oder 2, wobei $R^1$ in der allgemeinen Formel (I) unabhängig Fluor, eine Alkoxygruppe oder eine Aryloxygruppe sind.

**4.** Nichtwässeriger Elektrolyt nach Anspruch 1 oder 2, wobei mindestens drei der $R^1$ in der allgemeinen Formel (I) Fluor sind.

**5.** Nichtwässeriger Elektrolyt nach einem der Ansprüche 1 bis 4, wobei ein Volumenverhältnis der zyklischen Phosphazenverbindung, die durch die allgemeinen Formel (I) repräsentiert wird, zu der Fluorophosphatverbindung, die durch die allgemeine Formel (II) repräsentiert wird, in einem Bereich von 30/70 - 70/30 liegt.

**6.** Nichtwässeriger Elektrolyt nach einem der Ansprüche 1 bis 5, wobei das nichtwässerige Lösemittel weiterhin ein protonenfreies organisches Lösemittel enthält.

**7.** Nichtwässeriger Elektrolyt nach einem der Ansprüche 1 bis 6, wobei ein gesamter Inhalt der zyklischen Phosphazenverbindung, die durch die allgemeine Formel (I) repräsentiert wird, und der Fluorophosphatverbindung, die durch die allgemeine Formel (II) repräsentiert wird, in dem nichtwässerigen Lösemittel nicht weniger als 15 % nach Volumen beträgt.

**8.** Nichtwässeriger Elektrolyt nach Anspruch 7, wobei der gesamte Inhalt der zyklischen Phosphazenverbindung, die durch die allgemeine Formel (I) repräsentiert wird, und der Fluorophosphatverbindung, die durch die allgemeine Formel (II) repräsentiert wird, in dem nichtwässerigen Lösemittel nicht weniger als 70 % nach Volumen beträgt.

**9.** Nichtwässeriger Elektrolyt nach einem der Ansprüche 1 bis 8, der weiterhin eine ungesättigte zyklische Esterverbindung enthält, repräsentiert durch die folgende allgemeine Formel (III):

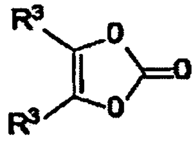
(III)

[wobei $R^3$ unabhängig Wasserstoff, Fluor oder eine Alkylgruppe mit einer Kohlenstoffzahl von 1-2 sind, mit der Bedingung, dass zwei $R^3$ miteinander verbunden sein können, um einen Ring zu bilden] und/oder eine aromatische Verbindung, repräsentiert durch die folgende allgemeine Formel (IV):

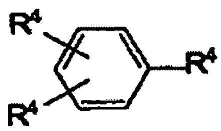
(IV)

[wobei $R^4$ unabhängig Wasserstoff, Fluor, eine Alkoxygruppe mit einer Kohlenstoffzahl von 1-2, eine Alkylgruppe oder eine Zykloalkylgruppe mit einer Kohlenstoffzahl von 1-6 oder eine Arylgruppe sind].

**10.** Batterie mit nichtwässerigem Elektrolyt, umfassend einen nichtwässerigen Elektrolyt nach einem der Ansprüche 1 bis 9, eine positive Elektrode und eine negative Elektrode.

## Revendications

**1.** Electrolyte non aqueux **caractérisé en ce qu'**il comprend un solvant non aqueux contenant un composé phosphazène cyclique représenté par la formule générale (I) suivante :

$(NPR^1{}_2)_n$ (I)

[dans laquelle les $R^1$ sont indépendamment un halogène élémentaire ou un substituant monovalent ; et n vaut 3-4, sous réserve que, quand n vaut 3, au moins quatre des $R^1$ soient des halogènes élémentaires et, quand n vaut 4, au moins sept des $R^1$ soient des halogènes élémentaires] et un composé phosphate fluoré représenté par la formule générale (II) suivante :

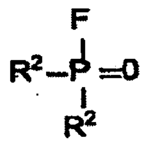
(II)

[dans laquelle les $R^2$ sont indépendamment un halogène élémentaire, un groupe alcoxy ou un groupe aryloxy, et au moins l'un des deux $R^2$ est un groupe alcoxy ou un groupe aryloxy], et un sel de support.

**2.** Electrolyte non aqueux selon la revendication 1, dans lequel l'un des deux $R^2$ est le fluor et l'autre est un groupe alcoxy ou un groupe aryloxy dans la formule générale (II).

**3.** Electrolyte non aqueux selon la revendication 1 ou 2, dans lequel les $R^1$ dans la formule générale (I) sont indépendamment le fluor, un groupe alcoxy ou un groupe aryloxy.

**4.** Electrolyte non aqueux selon la revendication 1 ou 2, dans lequel au moins trois des $R^1$ dans la formule générale (I) sont le fluor.

**5.** Electrolyte non aqueux selon l'une quelconque des revendications 1 à 4, dans lequel le rapport en volume du composé phosphazène cyclique représenté par la formule générale (I) au composé phosphate fluoré représenté

par la formule générale (II) est situé dans la plage allant de 30/70 à 70/30.

6. Electrolyte non aqueux selon l'une quelconque des revendications 1 à 5, dans lequel le solvant non aqueux contient en outre un solvant organique aprotique.

7. Electrolyte non aqueux selon l'une quelconque des revendications 1 à 6, dans lequel la teneur totale en le composé phosphazène cyclique représenté par la formule générale (I) et en le composé phosphate fluoré représenté par la formule générale (II) dans le solvant aqueux n'est pas inférieure à 15 % en volume.

8. Electrolyte non aqueux selon la revendication 7, dans lequel la teneur totale en le composé phosphazène cyclique représenté par la formule générale (I) et en le composé phosphate fluoré représenté par la formule générale (II) dans le solvant aqueux n'est pas inférieure à 70 % en volume.

9. Electrolyte non aqueux selon l'une quelconque des revendications 1 à 8, qui contient en outre un composé ester cyclique insaturé représenté par la formule générale (III) suivante :

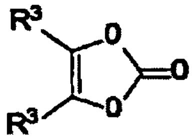

(III)

[dans laquelle les $R^3$ sont indépendamment l'hydrogène, le fluor ou un groupe alkyle ayant 1 ou 2 atomes de carbone, sous réserve que les deux $R^3$ puissent se lier l'un à l'autre pour former un cycle], et/ou un composé aromatique représenté par la formule générale (IV) suivante :

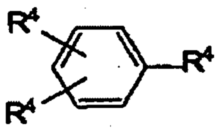

(IV)

[dans laquelle les $R^4$ sont indépendamment l'hydrogène, le fluor, un groupe alcoxy ayant 1 ou 2 atomes de carbone, un groupe alkyle ou un groupe cycloalkyle ayant de 1 à 6 atomes de carbone, ou un groupe aryle].

10. Batterie à électrolyte non aqueux comprenant un électrolyte non aqueux tel que revendiqué dans l'une quelconque des revendications 1 à 9, une électrode positive et une électrode négative.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H4184870 A
- JP H822839 A
- JP 2000182669 A
- JP H1167267 A
- JP H10189040 A
- JP 2003109659 A
- JP H0613108 A
- WO 2004001882 A
- WO 03090295 A
- EP 1201457 A
- US 2004091772 A